# FASCICULE DE BREVET EUROPEEN

(11) **EP 0 380 604 B1**
(45) Date de publication et mention de la délivrance du brevet: **20.07.1994**
(21) Numéro de dépôt: 89906791.2
(22) Date de dépôt: 30.05.1989
(51) Int. Cl.: G07C 1/30, G07F 7/08, G07F 7/00

(54) **DISPOSITIF A CARTE DE CREDIT DE STATIONNEMENT A TAUX HORAIRES VARIABLES, DE MANIERE CONTINUE**
VORRICHTUNG UND PARKKREDITKARTEN MIT KONTINUIERLICH EINSTELLBARER PARKGEBÜHRRATE
CREDIT CARD DEVICE FOR CONTINOUS PARKING FACILITIES WITH VARIABLE HOURLY RATES

(30) Priorité: 31.05.1988 FR 8807234; 14.10.1988 FR 8813577
(43) Date de publication de la demande: 08.08.1990
(73) Titulaire: SAGLIO, Claude, F-78000 Versailles (FR); PEAUX, Raymond, 34000 Montpellier (FR)
(72) Inventeur: SAGLIO, Claude, F-78000 Versailles (FR); PEAUX, Raymond, 34000 Montpellier (FR)
(74) Mandataire: Nony, Michel
(86) Numéro de dépôt international: FR8900263
(87) Numéro de publication internationale: WO8912286

(56) Documents cités:
- EP-A- 0 176 465
- WO-A-86/01922
- DE-A- 3 543 067
- FR-A- 2 523 337
- FR-A- 2 547 083
- FR-A- 2 581 222
- GB-A- 2 156 552
- GB-A- 2 158 628
- US-A- 4 277 837
- PATENT ABSTRACTS OF JAPAN, volume 10, no. 140 (P-458) (2197), 23 May 1986 ; & JP-A-60258692 (TATEISHI DENKI K.K.) 20 December 1985

## Description

La présente invention est relative à un dispositif à carte de crédit de stationnement à taux horaires variables.

On connaît déjà divers dispositifs utilisés pour le stationnement payant des véhicules.

Un premier dispositif de ce type, connu sous le nom de parcmètre, est placé à proximité de chaque place de stationnement et l'utilisateur, par l'introduction de pièces de monnaie, déplace une aiguille qui revient spontanément à sa position d'origine lorsque le temps de stationnement s'est écoulé compte-tenu du taux horaire en vigueur.

Dans un autre dispositif, on introduit dans un appareil des pièces de monnaie correspondant au temps de stationnement que l'on désire effectuer compte-tenu du taux horaire et l'on obtient un bulletin sur lequel se trouve imprimée, entre autres, l'heure limite du stationnement autorisé, bulletin que l'on place derrière le pare-brise du véhicule.

D'autres dispositifs plus compliqués font appel à des micro-ordinateurs pour assurer une gestion et un contrôle des véhicules en stationnement.

Outre leur complexité et leur coût, ces appareils nécessitent presque toujours d'organiser une collecte des pièces de monnaie introduites dans les dispositifs par les utilisateurs en paiement de leur temps de stationnement.

On connait également (WO-A-86/01922) des dispositifs à carte de crédit dans lesquels l'utilisateur peut choisir parmi un nombre limité de taux horaires, celui qui correspond à la zone où il désire stationner.

De tels dispositifs présentent également un certain nombre d'inconvénients qui sont éliminés grâce à l'invention.

Tout d'abord comme le nombre de taux horaires incorporé dans la carte de crédit est forcément limité à quelques uns, cette dernière ne peut être utilisée que dans les zones dont le taux horaire correspond à l'un d'eux. Compte tenu de la multiplicité des taux horaires d'une zone à une autre et d'une ville à l'autre, l'utilisateur qui voyage est obligé de se munir de plusieurs cartes dont les taux horaires ne sont pas les mêmes, ce qui est un inconvénient. De surcroit, de telles cartes de crédit cessent de pouvoir être utilisées lorsque l'on modifie les taux horaires des différentes zones de stationnement, ce qui se produit de temps à autre.

Mais, du point de vue du fabricant des cartes de crédit, l'inconvénient est encore beaucoup plus grand, car il doit fabriquer un nombre élevé de modèles différents de cartes de crédit, surtout s'il veut couvrir des pays dans lesquels les valeurs des monnaies nationales sont aussi différentes que celles de la Grande-Bretagne et l'Italie par exemple.

Au contraire, grâce à l'invention une seule carte permet d'être utilisée quel que soit le taux horaire du stationnement ou la monnaie dans laquelle il est exprimé.

Par ailleurs dans les dispositifs connus comportant quelques taux horaires prédéterminés, les changements de tarif ne peuvent se pratiquer qu'en changeant le prix de vente de la carte, ce qui, d'une part ne permet pas de modifier seulement certains des (aux horaires prédéterminés et d'autre part interdit la vente des cartes de parking dans des machines automatiques fonctionnant avec des billets dont la valeur correspond toujours à un chiffre rond.

La présente invention a pour objet un dispositif à carte de crédit de stationnement comportant en combinaison :
- une carte de crédit présentant une zone susceptible d'afficher un signal montrant que la carte est en cours de fonctionnement, ladite carte de crédit comprenant intérieurement un dispositif de comptage dont la valeur diminue à partir d'une valeur nominale pour tendre vers zéro au fur et à mesure que s'écoule le temps de stationnement, et un dispositif permettant de faire progresser ledit dispositif de comptage à une vitesse proportionnelle à la valeur du taux horaire du stationnement et une source pour alimenter en énergie électrique les dispositifs contenus à l'intérieur de la carte de crédit
- un support pour recevoir la carte de crédit, caractérisé par le fait que ladite carte de crédit comprend en outre au moins un contact coopérant avec ledit support pour le mettre en route lorsqu'elle est engagée dans le support, et pour l'arrêter lorsqu'elle en est retirée
- et des moyens permettant à l'utilisateur de
   faire varier de manière continue ou quasi continue la valeur du taux horaire de la carte pour le rendre égal à celui de la zone de stationnement.

Dans un mode de réalisation préféré de l'invention, la carte comporte en outre un moyen permettant d'interrompre le fonctionnement de la carte de crédit et l'affichage du signal correspondant lorsque la carte a fonctionné sans interruption pendant une durée au moins égale à une durée prédéterminée (par exemple de 2 heures) qui correspond au temps maximum de stationnement autorisé.

Selon un mode de réalisation préféré de l'invention, le signal de fonctionnement de la carte clignote pendant tout le temps où le véhicule est en stationnement régulier et ne clignote pas dans le cas contraire.

Selon un mode de réalisation préféré de l'invention, l'alimentation en énergie électrique s'effectue à partir d'une pile située dans l'épaisseur de la carte et à l'aide de contacts également situés à l'intérieur de celle-ci qui sont actionnés par le support lors de l'introduction de la carte dans ce dernier.

Pour éviter toute mise en fonctionnement intempestive de la carte il est avantageux, selon l'invention, de prévoir deux contacts distincts de préférence voisins, qui doivent être actionnés selon une séquence prédéterminée qui est réalisée lors de l'introduction de la carte dans son support.

Conformément à un mode de réalisation préféré de l'invention, la carte comporte également une zone d'affichage du crédit non consommé, ce crédit pouvant être exprimé en argent ou encore, de préférence, en temps de stationnement pour le taux horaire choisi par l'utilisateur.

Cette zone d'affichage peut par exemple afficher le montant en chiffre du crédit non consommé ou encore elle peut être constituée par une bande dont la longueur diminue ou augmente proportionnellement à la consommation du crédit de stationnement.

Une même zone peut être utilisée pour afficher alternativement le taux horaire et la réserve de crédit.

Selon un mode de réalisation particulier de l'invention, le moyen permettant de faire fonctionner le compteur à une vitesse proportionnelle au taux horaire de stationnement est constitué par une mémoire dans laquelle l'utilisateur peut introduire la valeur du taux horaire du stationnement qui est choisie en agissant par exemple sur une touche qui fait croitre de manière continue ce taux horaire ou sur une autre touche qui le fait décroître de la même manière. Le taux horaire ainsi choisi est utilisé par un micro-processeur pour faire décroître la valeur affichée par le compteur avec une vitesse proportionnelle à ce taux horaire.

Selon un mode de réalisation préféré de l'invention, la carte comporte également un ou plusieurs voyants qui s'allument successivement lorsque le crédit restant dans la carte se rapproche de zéro pour permettre à l'utilisateur d'apprécier le crédit dont il dispose encore, avant d'avoir à renouveler sa carte.

Selon un mode de réalisation perfectionné de l'invention, la carte comporte également un moyen permettant d'afficher une période de temps choisie par l'utilisateur à l'expiration de laquelle la carte se mettra automatiquement en fonctionnement ou cessera automatiquement de fonctionner.

Grâce à ce dispositif, la carte peut interrompre son fonctionnement à la fin d'une période payante ou le commencer au début d'une telle période.

Selon un autre mode de réalisation perfectionné, en vue de permettre une utilisation complète du crédit de la carte, cette dernière reste en fonctionnement continu pendant une durée prédéterminée (par exemple 30 minutes) lorsqu'elle est mise en fonctionnement pendant la période, matérialisée par un signal, qui correspond à une faible valeur résiduelle prédéterminée du temps d'utilisation de la carte (par exemple pendant les 15 dernières minutes).

On voit que, grâce au choix continu du taux horaire qui est fait par l'utilisateur selon l'invention, il est possible de disposer d'une carte de crédit universelle que l'on achète pour une valeur déterminée, et que l'on peut utiliser dans toutes les zones de stationnement quels que soient leurs taux horaires et malgré les augmentations de taux qui ont pu intervenir depuis l'achat de la carte.

Grâce à cette particularité de l'invention, il est possible de produire ainsi en très grandes séries et à bas prix un modèle unique de carte de crédit de stationnement qui peut comporter dans l'épaisseur même de la carte et enrobées à l'intérieur de cette dernière des zones d'affichages dont le dessin a été réalisé spécialement pour la carte de crédit, ainsi que les différents organes nécessaires à son fonctionnement et notamment sa pile d'alimentation.

Il en résulte que la carte selon l'invention est pratiquement infalsifiable car, d'une part tout accès à ses constituants provoque sa destruction, et d'autre part la falsification devrait intervenir sur chaque carte, ce qui est tout à fait dissuasif compte tenu de la difficulté de l'entreprise et de la valeur relativement faible de la carte.

La situation est par contre tout à fait différente lorsque l'on a affaire avec des dispositifs utilisant des cartes à puce qui pilotent un microprocesseur contenu dans un boîtier solidaire du véhicule qui contient les zones d'affiches car, dans ce cas, il est très difficile d'éviter des interventions frauduleuses sur le boîtier qui est particulièrement vulnérable.

Dans le but de mieux faire comprendre l'invention, on va en décrire maintenant à titre d'illustration et sans aucun caractère limitatif plusieurs modes de réalisation pris comme exemples représentés sur le dessin annexé.

Sur ce dessin,
- la figure 1 représente une vue en coupe selon I-I de la figure 2 d'un premier mode de réalisation de l'invention,
- la figure 2 est une vue en coupe selon II-II de la figure 1,
- la figure 3 est une vue du schéma électronique de la carte de crédit de la figure 1, et
- les figures 4 à 7 représentent un autre mode de réalisation de la carte dans différents états de fonctionnement.

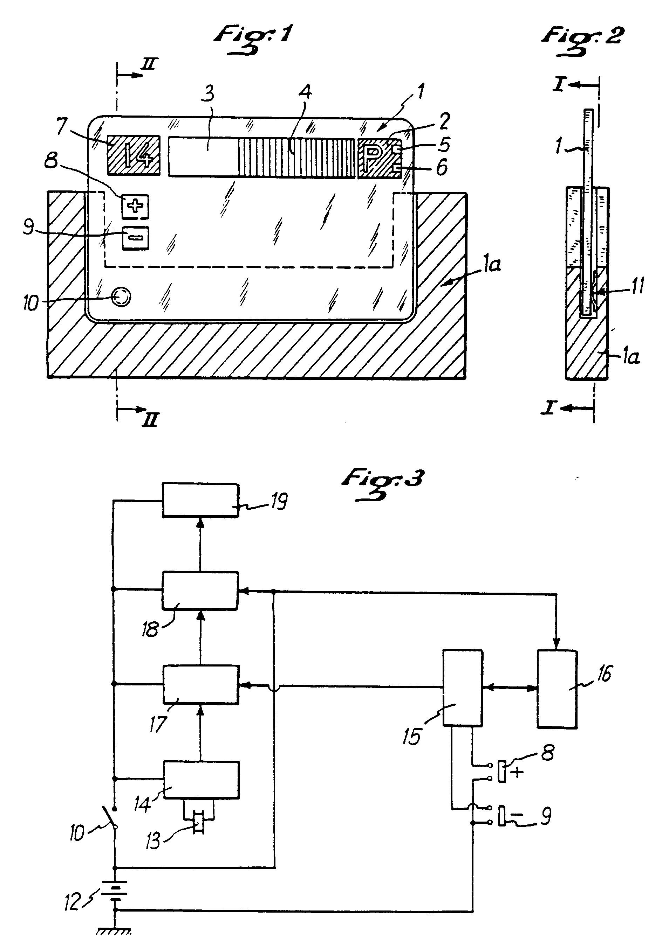

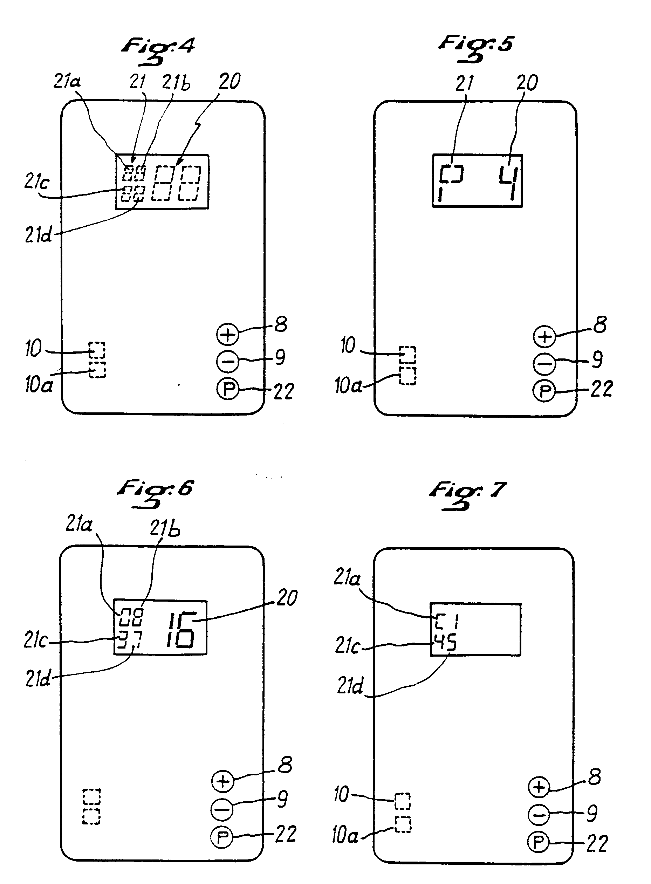

On a représenté sur les figures 1 et 2 la carte de crédit 1 qui est disposée dans son support 1a lequel a une forme générale de U dont les bords intérieurs sont munis d'une fente qui lui permet de recevoir la carte 1.

La carte 1 présente une zone d'affichage 2 qui constitue un témoin de fonctionnement faisant apparaître dans le cas présent la lettre P. Mais il est bien évident que ce témoin de fonctionnement pourrait faire apparaître un signal d'une autre nature.

La carte 1 présente une zone d'affichage 3 du crédit restant en mémoire qui, dans ce mode de réalisation, est constituée par une bande allongée dont la partie droite occupée par une série de traits verticaux 4 représente de manière analogique le crédit restant dans la carte.

Dans ce mode de réalisation, au fur et à mesure de la consommation du crédit, la zone 4 diminue progressivement pour finir par disparaître complètement lorsque la totalité du crédit est épuisée.

Cependant, il est clair que la bande 4 pourrait tout aussi bien progresser en longueur au fur et à mesure de la consommation du crédit.

Deux repères 5 et 6 également situés dans la zone 2, s'allument successivement lorsque le crédit de la carte s'approche de sa valeur nulle de manière à permettre à l'utilisateur de savoir qu'il doit procéder prochainement au changement de sa carte.

La carte comporte également une zone 7 d'affichage et de mise en mémoire du taux horaire pour lequel la carte de crédit se trouve réglée.

Dans le mode de réalisation représenté, cette zone comporte deux chiffres mais il va de soi qu'elle peut d'avantage.

C'est ainsi que selon l'invention il est préférable de définir le taux horaire par deux ou trois chiffres ce qui permet de faire varier ce dernier d'une manière continue et de pouvoir l'adapter à toutes les zones de parking des différents pays.

La carte comporte également les touches 8 et 9 qui permettent à l'utilisateur de règler la carte de crédit sur le taux horaire correspondant à l'emplacement du stationnement.

Lorsque l'utilisateur désire augmenter la valeur du taux horaire, il lui suffit d'appuyer sur la touche 8 qui est marquée "+" pour voir défiler progressivement dans la fenêtre 7 les valeurs croîssantes de taux horaire.

Inversement, en appuyant sur la touche 9 marquée "-", l'utilisateur fait défiler les valeurs décroîssantes du taux horaire dans la zone 7 de la carte.

Dans ce mode de réalisation la carte comporte un contact 10 sensible à la pression qui est actionné par un ressort 11 (figure 2) solidaire du support 1a.

Ce contact 10, lorsqu'il est actionné par le support, permet de relier la carte à une source d'énergie électrique qui est par exemple constituée par une pile contenue également à l'intérieur de la carte.

On a représenté sur la figure 3, le schéma électronique de la carte de la figure 1.

On retrouve sur ce schéma l'interrupteur 10 qui met sous tension le dispositif électronique à partir de la pile 12.

Ce dispositif est constitué par un quartz 13 qui alimente un oscillateur 14 avec une fréquence constante, lequel oscillateur comporte un pré-diviseur qui lui permet de fournir des séries d'impulsions à une fréquence plus faible.

On retrouve sur la figure 3 les contacts 8 et 9 qui agissent sur un sélecteur 15 pour charger la mémoire 16 de taux horaire, mémoire qui s'affiche dans la zone 7 comme on peut le voir sur la figure 1.

Le taux horaire affiché dans la mémoire 16 est envoyé, ainsi que les impulsions provenant de l'oscillateur pré-diviseur 14, dans un multiplieur fractionnaire qui élimine un nombre d'impulsions inversement proportionnel au taux horaire qui est affiché dans la mémoire.

Les impulsions restantes parviennent dans la mémoire permanente 18 du crédit qui est munie à son entrée d'un pré-diviseur pour réduire de manière uniforme le nombre d'impulsions qui sont envoyées dans la mémoire permanente.

Le crédit en valeur monaitaire présent à chaque instant dans la mémoire permanente 18 est affiché par l'afficheur 19 qui peut être constitué par un afficheur numérique exposant en clair le montant du crédit restant ou encore, comme c'est le cas pour la figure 1, par un afficheur analogique qui présente une bande 4 dont la longueur diminue on augmente en même temps que diminue le crédit présent dans la mémoire 18.

Les voyants 5 et 6 de la figure 1 sont activés lorsque le montant des crédits présent dans la mémoire permanente 18 atteint des valeurs faibles prédéterminées.

Dans le mode de réalisation qui a été décrit, la pile 12 est située à l'intérieur de la carte qui peut ainsi se présenter d'une manière parfaitement étanche et fiable.

Cependant, il est possible de prévoir une alimentation en énergie électrique qui soit transmise à la carte par des contacts métalliques correspondant avec ceux du support.

De même, dans le mode de réalisation représenté, le contact 10 est un contact mécanique qui est actionné en exerçant une pression sur la surface de la carte.

Cependant, il est clair que l'on ne sortirait pas du cadre de l'invention en utilisant un contact de type différent, par exemple un contact magnétique qui serait actionné lorsqu'il serait placé au voisinage d'un aimant qui pourrait être situé dans le support.

On a représenté sur les figures 4, 5, 6 et 7 un second mode de réalisation de l'invention.

La carte selon ce mode de réalisation, comporte deux zones d'affichage 20 et 21. Dans le cas présent, la zone d'affichage 20 permet d'afficher deux chiffres, alors que la zone d'affichage 21 peut en afficher 4 de dimensions moitiés.

Dans le mode de réalisation des figures 4 à 7, la carte comporte deux contacts 10 et 10a placés côte à côte l'un au dessus de l'autre, ce qui permet de ne mettre la carte en fonctionnement que lorsque l'on appuie successivement sur ses deux contacts dans un intervalle de temps prédéterminé qui correspond à un engagement normal de la carte dans son support qui peut être du type représenté sur les figures 1 et 2.

De cette manière, on évite qu'une pression accidentelle mette la carte en fonctionnement alors qu'elle n'est pas normalement utilisée.

Inversement, il suffit d'un quelconque appui sur l'un des contacts 10 et 10a pour arrêter le fonctionnement de la carte.

On retrouve également sur la carte des figures 4 à 7 les touches 8 et 9 qui permettent de faire varier le taux horaire.

Dans ce mode de réalisation, le taux horaire est affiché sur deux chiffres dans la zone 20. Comme dans le mode de réalisation précèdent, le fait d'appuyer sur la touche 8 affiche des taux horaires successifs croîssant de manière continue, alors que le fait d'appuyer sur la touche 9 affiche des taux horaires successifs décroîssant de manière continue.

Dans ce mode de réalisation, la touche 22 permet de prérégler la carte pour qu'elle commence à fonctionner ou qu'elle cesse de fonctionner après un intervalle de temps prédéterminable qui s'affiche dans la zone 21.

Par ailleurs, le crédit restant dans la carte s'affiche dans la zone 21 sous une forme numérique indiquant le nombre d'heures et de minutes de stationnement qui subsiste en fonction du taux horaire choisi.

Le fonctionnement de la carte est le suivant :
Initialement, aucun signal n'apparaît sur la carte que l'utilisateur tient à la main. Lorsque ce dernier appuie sur une des touches 8 et 9, tandis que la zone 21 affiche le temps de stationnement restant en crédit dans la carte (les heures en 21a, 21b et les minutes en 21c, 21d), pour le taux horaire choisi, la zone 20 affiche la valeur du taux horaire existant en mémoire dans la carte comme cela est représenté sur la figure 6 où le taux horaire affiché est de 16 Francs et le temps restant de 8 heures et 37 minutes.

Si l'on n'effectue aucune opération, le taux horaire et le crédit de temps restent affichés pendant par exemple 5 secondes, puis la carte supprime tout affichage.

Si, alors que le taux horaire et le crédit de temps sont affichés, on appuie sur la touche 8, on affiche successivement des taux horaires croîssants dans la zone 20, alors que si l'on appuie sur la touche 9 on y affiche successivement des taux horaires décroîssants. Le crédit de temps correspondant s'affiche simultanément dans la zone 21.

Si l'on engage maintenant la carte dans son support qui est analogue à celui du premier mode de réalisation, l'action de ce dernier sur les contacts 10 et 10a, assure comme indiqué précédemment, la mise en fonctionnement de la carte au taux horaire choisi qui reste affiché dans la zone 20 en clignotant pendant toute la durée du stationnemnent, alors que la lettre P apparaît aussi en clignotant dans la zone 21 comme on peut le voir sur la figure 5.

Dans ce mode de réalisation, l'affichage clignotant du taux horaire est la preuve du fonctionnement correct de la carte.

Après un temps prédéterminé qui peut être défini par le programme interne de la carte du fait que la durée maximum de stationnement est généralement de 2 heures, mais qui peut être préréglé par l'utilisateur comme cela sera expliqué ultérieurement, le taux de stationnement affiché en zone 20 et la lettre P en zone 21 cessent de clignoter la lettre P disparaît et la zone 20 affiche deux traits horizontaux non clignotant pour indiquer que le véhicule est en infraction à moins que l'on se trouve dans une plage horaire où le stationnement n'est pas payant.

Dans une variante l'affichage du taux horaire peut purement et simplement s'éteindre.

Dans le mode de réalisation des figures 4 à 7, il est prévu une touche supplémentaire 22 qui permet de déterminer l'arrêt ou le début du fonctionnement de la carte après l'intervalle de temps prédéterminé choisi.

Pour cela, le fait d'appuyer sur la touche 22 provoque l'affichage dans la partie 21a de la zone 21 d'un signal qui peut être par exemple la lettre C indiquant le commencement de fonctionnement de la carte, ou la lettre F indiquant la fin de fonctionnement de la carte.

Cette lettre qui peut être ainsi, (C, ou F), reste affichée pendant un temps prédéterminé, par exemple de 5 secondes. Une nouvelle action sur la touche 22 pendant ce temps à pour effet de modifier la lettre affichée en 21a. L'utilisateur peut ainsi sélectionner et afficher son choix de voir la carte, soit s'arrêter (F), soit démarrer (C) après un intervalle de temps prédéterminé.

Pour déterminer cet intervalle de temps il suffit, tandis que la lettre F ou la lettre C est affichée dans la zone 21a, d'appuyer sur une des touches 8 ou 9 pour afficher en 21b les heures, et en 21c et 21d les minutes de l'intervalle de temps après lequel la carte commencera ou arrêtera de fonctionner de la même manière que l'on choisit le taux horaire.

Pour des raisons de commodité, il est préférable que l'affichage de l'intervalle de temps se fasse par exemple par paliers de 5, 10 ou 15 minutes.

L'affichage de la lettre F ou de la lettre C et de l'intervalle de temps choisi subsiste pendant une durée de temps prédéterminée, qui est par exemple de 10 secondes.

Si pendant cette durée de 10 secondes la carte est introduite dans son support, le fonctionnement de la carte tiendra compte des indications fournies dans la zone 21.

Si par contre la carte n'est pas mise dans son support alors que la zone 21 est encore affichée, la carte fonctionnera dès son introduction dans le support mais sans tenir compte d'une instruction d'arrêt ou de démarrage après un temps prédéterminé.

Pour permettre un contrôle supplémentaire de l'utilisateur du fait que la carte doit commencer ou arrêter son fonctionnement après un intervalle de temps prédéterminé, dès qu'elle est introduite dans son support, la lettre C ou la lettre F reste affichée en 21a, de préférence en clignotant.

On a représenté sur la figure 7 la carte de crédit alors que l'on a appuyé sur la touche 22 pour faire apparaître la lettre C en 21a, et qu'en ayant appuyé sur les touches 8 et 9 on a fait apparaître le chiffre 1 en 21b, le chiffre 4 en 21c, et le chiffre 5 en 21d, ce qui signifie que, si la carte est introduite dans son support alors le taux horaire de la zone 20 est affichée, elle s'arrêtera de fonctionner 1 h 45 après son introduction dans le support.

Ce dispositif peut être par exemple utilisé dans le cas où le stationnement n'est plus payant à partir de 19 heures, et où l'utilisateur gare son véhicule à 17 h 15.

L'utilisateur peut également faire apparaître la lettre F et afficher 1 h 30 alors qu'il se gare à 12 h 30 pour que la carte commence à fonctionner à 14 heures, heure de début du stationnement payant.

Dans un mode de réalisation perfectionné de l'invention, lorsque le crédit de temps de stationnement est inférieur à une durée prédéterminée (par exemple de 15 minutes) et que l'on introduit la carte dans son support pour la faire fonctionner de manière continue, elle reste en fonctionnement pendant une durée prédéterminée supérieure à la première (par exemple de 30 minutes), après quoi elle est définitivement épuisée.

Ce perfectionnement donne à l'utilisateur la possibilité d'épuiser complètement le crédit de sa carte.

On voit que, conformément à l'invention, il est possible en évitant toute manipulation de monnaie lors d'utilisation de la carte, d'adapter le coût du stationnement au temps effectif de stationnement tout en respectant les différents tarifs de stationnement qui peuvent varier de manière continue, ceci même après que la carte a été commercialisée. On confère ainsi à la carte une utilisation universelle quels que puissent être les taux horaires de stationnement et les monnaies dans lesquelles ils peuvent être exprimes.

Il est bien entendu que les modes de réalisations qui ont été décrits peuvent recevoir toute modification désirable sans sortir pour cela du cadre de l'invention tel que défini par les revendications.

## Revendications

1. Dispositif à carte de crédit de stationnement à différents taux horaires, comportant en combinaison :
- une carte de crédit (1) présentant une zone (2) susceptible d'afficher un signal montrant que la carte est en cours de fonctionnement, ladite carte de crédit (1) comprenant intérieurement un dispositif de comptage dont la valeur diminue à partir d'une valeur nominale pour tendre vers zéro au fur et à mesure que s'écoule le temps de stationnement, un dispositif permettant de faire fonctionner ledit dispositif de comptage à une vitesse proportionnelle à la valeur du taux horaire de stationnement, et une source (12) pour alimenter en énergie électrique les dispositifs contenus à l'intérieur de la carte de crédit,
- un support (1a) pour recevoir la carte de crédit (1), caractérisée par le fait que ladite carte de crédit (1) comprend en outre au moins un contact (10) coopérant avec ledit support (1a) pour la mettre en route lorsqu'elle est engagée dans le support (1a) et pour l'arrêter lorsqu'elle en est retirée, et des moyens (8,9,15) permettant à l'utilisateur de faire varier de manière continue ou quasi continue la valeur du taux horaire de la carte pour le rendre égal à celui de la zone de stationnement.

2. Dispositif selon la revendication 1, caractérisé par le fait qu'elle comporte un moyen permettant d'interrompre le fonctionnement de la carte et l'affichage du signal correspondant (2,20) lorsque la carte a fonctionné sans interruption pendant une durée au moins égale à une durée prédéterminée qui correspond au temps maximum de stationnement autorisé.

3. Dispositif selon l'une quelconque des revendications précédentes, caractérisé par le fait que le signal de fonctionnement (2,20) de la carte clignote pendant tout le temps où le véhicule est en stationnement régulier et ne clignote pas dans le cas contraire.

4. Dispositif selon l'une quelconque des revendications précédentes, caractérisé par le fait que l'alimentation en énergie électrique s'effectue à partir d'une pile (12) située dans l'épaisseur de la carte et à l'aide contacts (10,10a) également situés à l'intérieur de celle-ci qui sont actionnés par le support (1a) de la carte lors de l'introduction de cette dernière.

5. Dispositif selon la revendication 4, caractérisé par le fait que la carte comporte deux contacts (10,10a) distincts, de préférence voisins, qui doivent être actionnés selon une séquence prédéterminée qui est réalisée lors de l'introduction de la carte dans son support.

6. Dispositif selon l'une quelconque des revendications précédentes, caractérisé par le fait que la carte comporte une zone d'affichage (4, 21) du crédit non consommé exprimé soit en argent, soit en temps de stationnement pour le taux horaire déterminé par l'utilisateur.

7. Dispositif selon la revendication 6, caractérisé par le fait qu'une même zone permet alternativement l'affichage du taux horaire et celui du crédit non consommé.

8. Dispositif selon l'une quelconque des revendications précédentes, caractérisé par le fait que la carte comporte une mémoire (15) dans laquelle l'utilisateur peut introduire la valeur du taux horaire de stationnement choisi en agissant par exemple sur une touche (8) qui fait croître ce taux horaire ou sur une autre touche (9) qui le fait décroître, le taux horaire ainsi déterminé étant utilisé par un microprocesseur pour faire décroître la valeur affichée par le compteur de crédit non consommé avec une vitesse proportionnelle au taux horaire.

9. Dispositif selon la revendication 8, caractérisé par le fait que le taux horaire sélectionné comporte au moins deux chiffres.

10. Dispositif selon l'une quelconque des revendications précédents, caractérisé par le fait que la carte comporte un ou plusieurs voyants (5, 6) qui s'allument successivement lorsque le crédit restant dans la carte se rapproche de zéro.

11. Dispositif selon l'une quelconque des revendications précédentes, caractérisé par le fait que la carte comporte un moyen (21) permettant d'afficher une période de temps choisie par l'utilisateur à l'expiration de laquelle la carte se mettra automatiquement à fonctionner ou cessera automatiquement de fonctionner.

12. Dispositif selon la revendication 11, caractérisé par le fait qu'il comporte une zone d'affichage (21a) indiquant si à l'expiration de la période de temps choisie la carte cessera de fonctionner ou commencera à fonctionner.

13. Dispositif selon l'une quelconque des revendications 11 et 12, caractérisé par le fait que les touches (8,9) permettant de choisir le taux horaire servent également à choisir la période de temps à l'expiration de laquelle la carte se mettra automatiquement à fonctionner ou cessera automatiquement de fonctionner.

14. Dispositif selon l'une quelconque des revendications précédentes, caractérisé par le fait que lorsque la carte est mise en fonctionnement ininterrompu alors qu'elle ne contient plus qu'une faible valeur résiduelle prédéterminée de crédit de stationnement, elle reste cependant en fonctionnement pendant une durée prédéterminée minimum qui peut excéder le solde du crédit de stationnement.

## Claims

1. Credit card device for parking with different hourly rates, including in combination:
- a credit card (1) having on area (2) capable of displaying a signal showing that the card is in operation, the said credit card (1) internally comprising a counting device the value of which reduces from a nominal value so as to tend to zero in proportion as the parking time runs out, a device allowing the said counting device to be made to operate at a speed proportional to the value of the hourly parking rate, and a source (12) for supplying electrical energy to the devices contained within the credit card,
- a support (1a) for receiving the credit card (1), characterized in that the said credit card (1) further comprises at least one contact (10) cooperating with the said support (1a) so as to put it into operation when it is engaged in the support (1a) and to stop it when it is withdrawn therefrom, and means (8,9,15) allowing the user continuously or near-continuously to vary the value of the hourly rate of the card so as to make it equal to that of the parking area.

2. Device according to Claim 1, characterized in that it includes a means making it possible to interupt the operation of the card and the display of the corresponding signal (2,20) when the card has operated without interruption for a duration at least equal to a predetermined duration which corresponds to the maximum authorized parking time.

3. Device according to any one of the preceding claims, characterized in that the operating signal (2,20) of the card flashes throughout the time in which the vehicle is legally parked and does not flash in the opposite case.

4. Device according to any one of the preceding claims, characterized in that the electrical energy power supply comes from a battery (12) situated in the thickness of the card and with the aid of contacts (10,10a) also situated within the card which are actuated by the support (1a) of the card upon insertion of the latter.

5. Device according to Claim 4, characterized in that the card includes two separate contacts (10, 10a), preferably adjacent, which have to be actuated in a predetermined sequence which is implemented when the card is inserted into its support.

6. Device according to any one of the preceding claims, characterized in that the card includes an area (4,21) for displaying the unconsumed credit expressed either in money, or in parking time for the hourly rate determined by the user.

7. Device according to Claim 6, characterized in that a single area alternately allows a display of the hourly rate and that of the unconsumed credit.

8. Device according to any one of the preceding claims, characterized in that the card includes a memory (15) into which the user can insert the value of the chosen hourly parking rate by acting, for example, on a key (8) which makes this hourly rate increase or on another key (9) which makes it decrease, the hourly rate thus determined being used by a microprocessor in order to make the value of the unconsumed credit displayed by the counter decrease with a speed proportional to the hourly rate.

9. Device according to Claim 8, characterized in that the selected hourly rate includes at least two figures.

10. Device according to any one of the preceding claims, characterized in that the card includes one or more lamps (5, 6) which light up successively when the credit remaining in the card approaches zero.

11. Device according to any one of the preceding claims, characterized in that the card includes a means (21) making it possible to display a period of time chosen by the user at the expiry of which the card will automatically set itself to operate or will automatically cease to operate.

12. Device according to Claim 11, characterized in that it includes a display area (21a) indicating whether, at the expiry of the chosen time period, the card will automatically set itself to operate or will automatically cease to operate.

13. Device according to any one of Claims 11 and 12, characterized in that the keys (8,9) making it possible to choose the hourly rate also serve to choose the period of time at the expiry of which the card will automatically set itself to operate or will automatically cease to operate.

14. Device according to any one of the preceding claims, characterized in that when the card is set into uninterrupted operation although it contains no more than a small predetermined residual value of parking credit, it nevertheless remains in operation for a predetermined minimum duration which may exceed the balance of the parking credit.

## Patentansprüche

1. Parkkreditkarten-Vorrichtung mit verschiedenen Stundensätzen, umfassend in Kombination:
- eine Kreditkarte (1) mit einem Bereich (2), der zum Anzeigen eines Signals, daß die Karte im Betrieb ist, geeignet ist, wobei die Kreditkarte (1) im Inneren eine Zähleinrichtung, deren Wert von einem Nennwert gegen Null geht in dem Maße als die Parkzeit verstreicht, eine Einrichtung, die es gestattet, die Zähleinrichtung mit einer zur Höhe des Parkstundensatzes proportionalen Geschwindigkeit arbeiten zu lassen, und eine Spannungsquelle (12) zur elektrischen Energieversorgung der im Inneren der Kreditkarte befindlichen Einrichtungen beinhaltet,
- eine Halterung (1a) zur Aufnahme der Kreditkarte (1), dadurch gekennzeichnet, daß die Kreditkarte (1) außerdem mindestens einen Kontakt (10) enthält, der in Zusammenwirkung mit der Halterung (1a) die Karte in Betrieb setzt, sobald sie in die Halterung (1a) eingeführt ist, und sie zum Stoppen bringt, sobald sie aus dieser herausgezogen ist, sowie eine Einrichtung (8, 9, 15), mittels der der Benutzer die Höhe des Stundensatzes der Karte mit dem des Parkbereichs kontinuierlich oder quasi-kontinuierlich gleichsetzen kann.

2. Vorrichtung nach Anspruch 1, dadurch gekennzeichnet, daß sie eine Einrichtung aufweist, die es gestattet, den Arbeitsvorgang der Karte zu unterbrechen und das entsprechende Signal (2, 20) anzuzeigen, wenn die Karte ohne Unterbrechung während einer Dauer von mindestens der der erlaubten Parkhöchstdauer entsprechenden vorgegebenen Zeit gelaufen ist.

3. Vorrichtung nach einem der vorhergehenden Ansprüche, dadurch gekennzeichnet, daß das Betriebssignal (2, 20) der Karte während der Zeit regulären Parkens des Fahrzeuges blinkt, sonst nicht blinkt.

4. Vorrichtung nach einem der vorhergehenden Ansprüche, dadurch gekennzeichnet, daß die Stromversorgung von einer in der Dicke der Karte untergebrachten Batterie (12) und mit Hilfe von ebenfalls im Inneren der Karte gelegenen Kontakten (10, 10a) bewirkt wird, die mit dem Einführen der Karte durch die Karten-Halterung (1a) aktiviert werden.

5. Vorrichtung nach Anspruch 4, dadurch gekennzeichnet, daß die Karte zwei getrennte, vorzugsweise benachbarte Kontakte (10, 10a) aufweist, die in einer vorbestimmten, mit dem Einführen der Karte in ihre Halterung verwirklichten Reihenfolge, aktiviert werden müssen.

6. Vorrichtung nach einem der vorhergehenden Ansprüche, dadurch gekennzeichnet, daß die Karte einen Anzeigebereich (4, 21) für den nicht verbrauchten Kredit aufweist, der entweder als Geldbetrag oder als Parkzeit für den vom Benutzer festgelegten Stundensatz angezeigt wird.

7. Vorrichtung nach Anspruch 6, dadurch gekennzeichnet, daß ein und derselbe Bereich wechselweise die Anzeige des Stundensatzes und das nicht verbrauchten Kredits erlaubt.

8. Vorrichtung nach einem der vorhergehenden Ansprüche, dadurch gekennzeichnet, daß die Karte einen Speicher (15) aufweist, in den der Benutzer den Wert des gewählten Parkstundensatzes eingeben kann, indem er z.B. eine Taste (8) betätigt, die diesen Parkstundensatz steigen läßt, oder eine andere Taste (9), die diesen vermindert, wobei der auf diese Art festgelegte Stundensatz von einem Mikroprozessor benutzbar wird, um den angezeigten Wert des Zählers, der den nicht verbrauchten Kredit angibt, mit einer zum Stundensatz proportionalen Geschwindigkeit zu vermindern.

9. Vorrichtung nach Anspruch 8, dadurch gekennzeichnet, daß der gewählte Stundensatz mindestens zwei Ziffern aufweist.

10. Vorrichtung nach einem der vorhergehenden Ansprüche, dadurch gekennzeichnet, daß die Karte eine oder mehrere Anzeigeeinrichtungen (5, 6) aufweist, die sich nacheinander einschalten, wenn der auf der Karte verbleibende Kredit gegen Null geht.

11. Vorrichtung nach einem der vorhergehenden Ansprüche, dadurch gekennzeichnet, daß die Karte eine Einrichtung (21) aufweist, die die Anzeige einer vom Benutzer gewählten Zeitperiode gestattet, nach deren Ablauf sich die Karte automatisch entweder in oder außer Betrieb setzt.

12. Vorrichtung nach Anspruch 11, dadurch gekennzeichnet, daß sie einen Anzeigebereich (21a) aufweist, der angibt, ob sich nach Ablauf der gewählten Zeitperiode die Karte in oder außer Betrieb setzt.

13. Vorrichtung nach einem der Ansprüche 11 und 12, dadurch gekennzeichnet, daß die Tasten (8, 9), die eine Wahl des Stundensatzes gestatten, gleichermaßen dazu dienen, die Zeitperiode zu wählen, nach deren Ablauf sich die Karte automatisch in oder außer Betrieb setzt.

14. Vorrichtung nach einem der vorhergehenden Ansprüche, dadurch gekennzeichnet, daß die Karte dann, wenn sie ununterbrochen in Betrieb gesetzt ist und nicht mehr als einen geringen vorgegebenen Restbetrag an Parkkredit enthält, trotzdem eine vorbestimmte, den Parkkreditgehalt möglicherweise überschreitenden Mindestdauer lang in Funktion bleibt.
